# EUROPEAN PATENT SPECIFICATION

(11) **EP 2 286 570 B1**
(45) Date of publication and mention of the grant of the patent: **15.02.2012**
(21) Application number: 09761530.6
(22) Date of filing: 26.03.2009
(51) Int. Cl.: H04L 29/08

(54) **USER-REQUEST-INITIATED TRANSMISSION OF DATA FILES**
DURCH BENUTZERANFORDERUNG EINGELEITETE ÜBERTRAGUNG VON DATEN-DATEIEN
TRANSMISSION DE FICHIERS DE DONNÉES DÉCLENCHÉE À LA DEMANDE D'UN UTILISATEUR

(30) Priority: 09.06.2008 SE 0801345; 10.06.2008 US 60272 P
(43) Date of publication of application: 23.02.2011
(73) Proprietor: Mobizoft AB, 977 75 Lulea (SE)
(72) Inventor: SUNDSTRÖM, Anders, S-954 41 Södra Sunderbyn (SE); LUNDMARK, Magnus, S-977 51 Luleå (SE); CHRISTENSEN, Mattias, SE-961 33 Boden (SE); LINDBÄCK, Lars, S-975 94 Luleå (SE)
(74) Representative: Wihlsson, Joakim Per Magnus
(86) International application number: PCT/EP2009/053567
(87) International publication number: WO 2009/149967

(56) References cited:
- EP-A- 1 555 823
- US-A1- 2003 135 863
- US-A1- 2003 167 334

## Description

### THE BACKGROUND OF THE INVENTION AND PRIOR ART

The present invention relates generally to distribution of data files to user terminals. More particularly the invention relates to a computer node according to the preamble of claim 1 and a method according to claim 13. The invention also relates to a computer program according to claim 26 and a computer readable medium according to claim 27.

Today, digital content comes in many different forms, for instance as texts, images, sounds and video. Moreover, the public demand for digital media increases rapidly. However, each type of content can occur in a wide range of formats, and normally, due to hardware and/or software limitations, a given user terminal is only capable of displaying/playing a subset of all theoretically possible formats. It is therefore an intricate task to distribute digital content to any larger number of potential recipient terminals.

To tackle this problem, WO 2007/066980 discloses a system wherein customized content is provided based on terminal information. In response to a user selection of particular contents, it is determined whether the selected contents are available, or if it is necessary to request a contents provider to provide the contents. It is also determined whether a file format of the available/received contents needs to be converted to suit the user's terminal, and if so appropriate conversion is performed. Subsequently, the contents are transmitted to the terminal. Specifically, to determine a suitable data format, a profile management unit is preferably used to extract a profile of the user's terminal.

US 2006/0036610 discloses another system for converting and sharing files. Here, a terminal device configuration database stores a plurality of configuration information for different terminal devices. Based thereon, files are converted and transferred to users' terminal devices in response to requests there from.

Document US 2003/0167334 discloses a method for accessing content from a web page to a variety of client devices.

Consequently, solutions already exist through which digital content can be transmitted to a variety of different user terminals. However, offering a suitable set of file formats with regard to the capacities and capabilities of the terminals expected to access the digital content via a resource, such as a web page, is still a non-trivial task. Moreover, it is challenging to offer such content in a simple and straightforward manner to the typical terminal user. However, more important, the strategies applied in the known systems risk failing to identify the features of the user terminal which determine the file format that is ideal for the terminal.

### SUMMARY OF THE INVENTION

The object of the present invention is therefore to solve the above problems, and thus offer a user-friendly solution for distributing data files efficiently via a general network, while enabling data supply to a large variety of user terminals.

According to one aspect of the invention, the object is achieved by the computer node as initially described, wherein the control unit in the node is further configured to derive at least two basic request components based on the user request. Each basic request component here reflects a respective set of features characterizing specific aspects of a playback/display capacity of the user terminal from which the user request was originated. The control unit is also configured to execute a playback/display capacity algorithm based on the at least two basic request components. The algorithm contains at least two consecutive steps (i.e. one or more steps follow an initial step). Additionally, based on a result of the execution of the algorithm the control unit is configured to derive a composite playback/display capacity of the user terminal. The composite playback/display capacity reflects the terminal's capability to handle a particular type of content included in the requested data file. Moreover, the control unit is configured to select a version of the requested data file, which version matches the composite playback/display capacity. Finally, the control unit is configured to cause forwarding of the selected version of the requested data file to the user terminal.

Such a computer node is advantageous because it enables provision of a single identifier for each data file irrespective of the number of different formats in which the file is held available, for instance on a web page. Furthermore, a most suitable version of the file is selected automatically (i.e. without requiring a user decision).

According to one preferred embodiment of this aspect of the invention, a first component of the at least two basic request components includes user-agent data reflecting: the vendor, the model, the display size, the software version and/or the character set supported by the terminal. Hence, based on the first component, important factors determining the terminal's display/ playback capabilities can be derived.

According to another preferred embodiment of this aspect of the invention, a second component of the at least two basic request components includes accept data reflecting the particular type of content included in the requested data file. Thus, based on the second component, further factors determining the terminal's display/playback capabilities can be derived.

According to yet another preferred embodiment of this aspect of the invention, a third component of the at least two basic request components includes user-agent-profile data specifying a URL to a file describing a predefined set of features in respect of the playback/display capacity of the user terminal. Consequently, if the user request itself provides insufficient data, the URL can potentially offer this data.

According to a further preferred embodiment of this aspect of the invention, the control unit is configured to derive at least one auxiliary request component in addition to the at least two basic request components based on the user request, if the control unit finds that the basic request components fail to fulfill a completeness requirement. For example, the auxiliary request component may include: an *x-operamini-phone-ua* header field (i.e. the original user-agent header of a terminal using an Opera Mini browser), an *x-wap-profile header field* (i.e. a reference to the user-agent profile as specified), an *x-up-devcap-screenpixels* header filed (i.e. a screen size specified in ipxel), and/or an *x-device-accept* header field (i. e. the original accept headers of the terminal after having passed through a transcoder). Thereby, yet additional possibilities are created for adequately deriving the terminal's playback/display capacity.

According to still another preferred embodiment of this aspect of the invention, the node includes an exceptions database describing corrections of known device anomalies. The control unit is configured to adjust the features of the playback/display capacity of the user terminal derived from the at least two basic request components based on the contents of the exceptions database, and thus produce an enhanced composite playback/display capacity of the user terminal. This enables compensation for errors, which would have occurred if the contents as such of the basic request components were followed.

According to still another preferred embodiment of this aspect of the invention, the node includes a rules database over parameters which describe features of the playback/display capacity of the user terminal in addition to the contents of the at least two basic request component. Here, the control unit is configured to apply a set of rules from the rules database to the result of the playback/display capacity algorithm, or the above-described exceptions, and thus produce a (further) enhanced composite playback/display capacity of the user terminal. For example, the rules may express non-detectable parameters, such as the fact that a particular type of terminal is equipped with a flash player.

According to a further preferred embodiment of this aspect of the invention, the control unit is configured to generate a data record reflecting the enhanced composite playback/display capacity, and store the data record in association with a terminal reference in a storage means. Then, in response to a received future user request, the control unit is configured to check if the request was originated from a user terminal having a terminal reference that matches a terminal reference already stored in the storage means. If this is found to be the case, the control unit is configured to retrieve an enhanced composite playback/display capacity from a data record being associated with the matching terminal reference. Naturally, this substantially speeds up the process of identifying an appropriate version of the selected data file because all the above-described investigations regarding the terminal's playback/display capacity can thereby be by-passed.

According to another preferred embodiment of this aspect of the invention, the control unit is configured to cause a progressive forwarding of the contents of the selected version of the requested data file to the user terminal in such a manner that the user terminal is enabled to initiate playback/display of the data file prior to that all the contents of the file has reached the user terminal. Consequently, the control unit may be configured to cause streaming, progressive downloading, or equivalent of the selected version of the requested data file to the user terminal. Of course, this is highly advantageous compared to conventional downloading, where the entire data file must be stored in the user terminal before the file can be played/displayed.

According to yet another preferred embodiment of this aspect of the invention, in the event that no version of the requested data file can be found in the collection of data files that matches the composite playback/display capacity of the user terminal (e.g. because the terminal has very limited resources), the control unit is configured to select an alternative data file, which indeed matches the composite playback/display capacity. However, the alternative data file includes contents different from the contents of the requested data file. For example, it the requested data file represents a video sequence, the alternative data file may be a default still image from that sequence. The control unit is likewise configured to cause forwarding of the alternative data file to the user terminal. Thereby, error messages can be avoided, and also relatively dated equipment can be used to access the data files at least to some extent.

According to still another preferred embodiment of this aspect of the invention, the node includes at least one payload database and an output interface. The at least one payload database contains the collection of data files and the different versions thereof. The control unit is configured to cause forwarding of the selected version of the requested data file from the node itself to the user terminal, and the data is transmitted via the output interface. Although, of course, it is technically feasible that the data files (at least partly) be separated from the proposed node, in some cases it may be advantages to have the files co-located with the node.

According to another aspect of the invention, the object is achieved by the initially described method, wherein the method involves deriving at least two basic request components based on the user request. Here, each basic request component reflects a respective set of features characterizing specific aspects of a playback/display capacity of the user terminal from which the user request was originated. Additionally, the method involves executing a playback/display capacity algorithm based on the at least two basic request components. The algorithm contains at least two consecutive steps. Based on a result of the execution of said algorithm, the method involves deriving a composite playback/display capacity of the user terminal. The composite playback/display capacity reflects the terminal's capability to handle a particular type of content included in the requested data file. Thereafter, the method involves selecting a version (F1vi) of the requested data file, which version matches the composite playback/display capacity; and forwarding of the selected version of the requested data file to the user terminal. The advantages of this method, as well as the preferred embodiments thereof, are apparent from the discussion hereinabove with reference to the proposed system.

According to a further aspect of the invention the object is achieved by a computer program, which is loadable into the internal memory of a computer, and includes software for controlling the above proposed method when said program is run on a data-processing apparatus.

According to another aspect of the invention the object is achieved by a computer readable medium, having a program recorded thereon, where the program is to control a data-processing apparatus to perform the above proposed method.

Further advantages, advantageous features and applications of the present invention will be apparent from the following description and the dependent claims.

### BRIEF DESCRIPTION OF THE DRAWINGS

The present invention is now to be explained more closely by means of preferred embodiments, which are disclosed as examples, and with reference to the attached drawings.
- Figure 1: shows an overview of a computer system including a computer node according to one embodiment of the invention; and
- Figure 2: illustrates, by means of a flow diagram, a general method of supplying data files according to the invention.

### DESCRIPTION OF PREFERRED EMBODIMENTS OF THE INVENTION

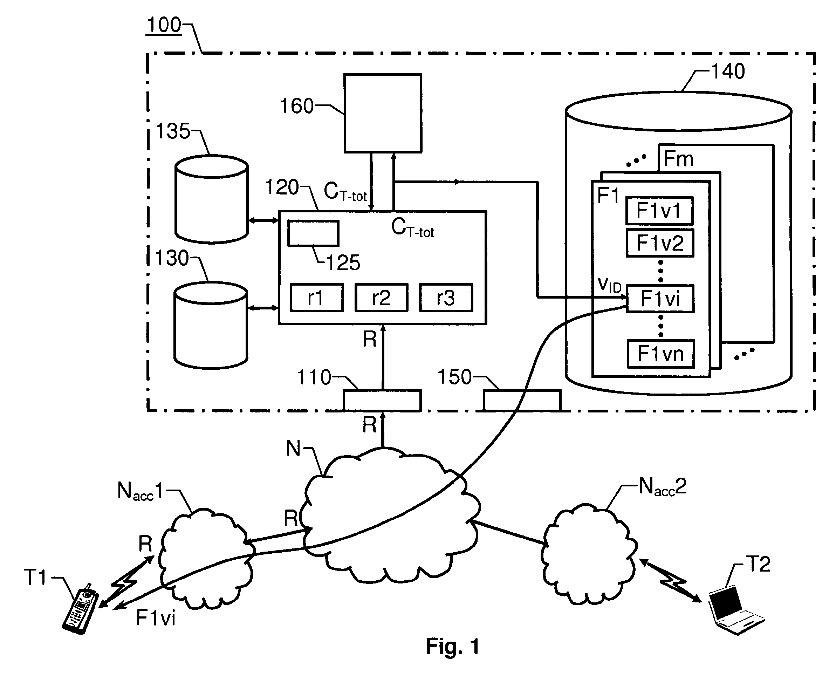

We refer initially to Figure 1, which shows a computer system. The system includes a computer node 100 connected to a network N. A number of user terminals T1 and T2 are also connected to the network N, however in this example, via a respective access network N_{acc1} and N_{acc2}. Here, a first terminal T1 is represented by a mobile telephone and a second terminal T2 is represented by a laptop. However, according to the invention, the user terminals T1 and T2 may likewise be embodied in arbitrary type of equipment configured to exchange data over a wired or wireless network, e.g. a desktop computer, a palm top, a PDA (personal digital assistant) or a smartphone. Moreover, according to the invention, any number of intermediate networks between access network N_{acc1} and N_{acc2} and the network N is conceivable as long as the intermediate networks render it possible for the user terminals T1 and T2 to send user requests R there through to the node 100.

The node 100 is associated with a collection of data files F1,..., Fm, which are adapted to be supplied to the user terminals T1 and T2 respectively for playback/display therein. The collection of data files F1,..., Fm may either be stored in at least one payload database 140 within the node 100, or be stored partially, or entirely in equivalent storage means outside the node 100.

In any case, the node 100 includes a request input interface 110 and a control unit 120. The request input interface 110 is configured to receive user requests R from the user terminals T1 and T2 via the data network N. Each user request R identifies a requested data file F1 in the collection of data files F1,..., Fm, i.e. digital contents that a user wishes to playback/view in his/her terminal. Preferably, the collection of data files F1,..., Fm is held available via a web page, a wap page, or corresponding resource.

The control unit 120 is configured to receive incoming user requests R from the request input interface 110. In response to each such request R, the control unit 120 is configured to select a particular version F1vi of the data file F1 from the collection of data files F1,..., Fm. Here, the selection is symbolized by means of a pointer V_{ID} to a file version F1v1 in the payload database 140. Namely, each data file F1 exists in at least two different versions, say F1v1, F1v2 up to F1vn. Furthermore each version of the data file F1 is adapted for playback/display in at least one type of user terminal T1 and T2. If the data file F1 represents a video sequence, a first version F1v1 may be an MPEG-4 file, a second version F1v2 may be a 3GP file, a third version may be an ASF file, and so on.

In general, if the data file F1,..., Fm represents a video sequence the versions thereof may for example include one or more files of the formats: MPEG-1, MPEG-2, MPEG-4, H.120, H.261, H.262, H.263, H.264, AMV, AVS, Bink, Dirac, Indeo, Pixlet, RealVideo, RTVideo, SheerVideo, Smacker, Snow, Theora, VC-1, VP6, VP7 and WMV; if the data file F1,..., Fm represents an audio sequence the versions thereof may for example include one or more files of the formats: Audio, AC3, AMR, Apple Lossless, ATRAC, FLAC, iLBC, µ-law, Musepack, Nellymoser, OptimFROG, RealAudio, RTAudio, SHN, Siren, Speex, Vorbis, WavPack, WMA, TAK, AIFF, AU and WAV; and if the data file F1,..., Fm represents a still image the versions thereof may for example include one or more files of the formats: JPEG, JPEG 2000, lossless JPEG, JBIG, JBIG2, PNG, WBMP, BMP, GIF, ICER, ILBM, PCX, PGF, TGA, TIFF and JPEG XR / HD Photo. Moreover, the formats: 3GP, ASF, AVI, Bink, DMF, DPX, FLV, Matroska, MP4, MXF, NUT, Ogg, Ogg Media, QuickTime, Real-Media, Smacker, RIFF and VOB may be used for general types of media, i.e. digital contents in the form of video, audio as well as still images.

In order to select a most suitable version of a requested data file F1 (i.e. assign the pointer V_{ID} appropriately), the control unit 120 is configured to derive at least two basic request components based on the user request R. Here, the basic request components are exemplified by r1, r2 and r3, which, as will be discussed below, may designate a user agent, accept data and a user-agent-profile respectively. In any case, each basic request component r1, r2 and r3 reflects a respective set of features characterizing specific aspects of a playback/display capacity of the user terminal T1 from which the user request R was originated.

The control unit 120 is also configured to execute a playback/ display capacity algorithm based on the at least two basic request components r1, r2 and r3. The proposed algorithm contains at least two consecutive steps. This means that at least one subsequent step follows after an initial step. Based on a result of the execution of said algorithm, the control unit 120 is further configured to derive a composite playback/display capacity C_{T-tot} of the user terminal T1. The composite playback/display capacity C_{T-tot} reflects the terminal's T1 capability to handle a particular type of content included, (e.g. video sequences) in the requested data file F1.

The composite playback/display capacity C_{T-tot}, in turn, serves as a basis for selecting the version F1vi of the requested data file F1, which version F1vi matches the composite playback/display capacity C_{T-tot}. Finally, the control unit 120 is configured to cause forwarding of the selected version F1 vi of the requested data file F1 to the user terminal T1.

If the selected file version F1vi is stored in a payload database 140 within the node 100, the control unit 120 is specifically configured to forward the file F1vi via an output interface 150 in the node 100. Otherwise, the control unit 120 is configured to order forwarding of the file F1vi from a network resource where the file F1vi is stored to the user terminal T1.

Irrespective of where the file F1vi is located, the control unit 120 is preferably configured to cause a progressive forwarding of the contents of the file F1vi to the user terminal T1 in such a manner that the user terminal T1 is enabled to initiate playback/ display of the file F1 vi prior to that all the contents of the file F1 vi has reached the user terminal T1. This typically means that the control unit 120 is configured to cause streaming of the selected version F1vi of the requested data file F1 to the user terminal T1. However, so-called progressive downloading is also technically feasible.

Returning now the above-mentioned basic request components, according to one preferred embodiment of the invention, a first component r1 thereof includes user-agent data. This data may include information regarding the user terminal T1, such as vendor, model, display size, software version and character set supported.

According to one preferred embodiment of the invention, a second component r2 of the basic request components includes accept data reflecting the particular type of content included in the requested data file F1. For instance, if the requested data file F1 contains audio data, this can be reflected by the second basic request component r2.

According to one preferred embodiment of the invention, a third component r3 of the basic request components includes user-agent-profile data. This data, in turn, specifies a URL (universal/ uniform resource locator) to a file describing a predefined set of features in respect of the playback/display capacity of the user terminal T1. Preferably, the file that is identified by said URL includes a so-called DDR (device description repository), i.e. capability information in respect of the user terminal T1.

According to one preferred embodiment of the invention, if the control unit 120 concludes that the basic request components r1, r2 and r3 fail to fulfill a completeness requirement (e.g. r1, r2 and r3 constitute an insufficient basis for determining a most suitable version of the requested file F1 for the user terminal T1 having originated the requested R for this file F1), the control unit 120 is further configured to derive at least one auxiliary request component (i.e. in addition to the at least two basic request components r1, r2, and/or r3). The control unit 120 also derives the at least one auxiliary request component based on the user request R.

Preferably, the auxiliary request component includes one of more of the following components: an *x-operamini-phone-ua* header field, an *x-wap-profile* header field, an *x-up-devcap-screenpixels* header filed and an *x-device-accept* header field. The *x-operamini-phone-ua* header field expresses. the original user-agent header of a terminal that uses an Opera Mini browser, the *x-wap-profile header field* expresses a reference to the user-agent profile as specified (i.e. in its original form), the *x-up-devcap-screenpixels* header filed expresses a screen size specified in ipxel, and the *x-device-accept* header field expresses the original accept headers of the terminal after that these headers have passed through a transcoder.

According to one preferred embodiment of the invention, the node 100 includes, or is associated with, an exceptions database 130. This database 130 describes corrections of known anomalies in the specifications of the user terminals T1 and T2. For example, the specifications for the user terminal T1 may indicate that the terminal is equipped with a screen size being 254 pixels wide, whereas the actual screen width is only 250 pixels. Hence, based on the contents of the exceptions database 130, the control unit 120 is configured to adjust the features of the playback/ display capacity of the user terminal T1 and T2 derived from the basic request components r1, r2 and/or r3. As a result, in response to the user request R from the user terminal T1, the control unit 120 produces an enhanced composite playback/display capacity C_{T-tot} of the user terminal T1. I.e. the enhanced composite playback/ display capacity C_{T-tot} has higher expected data quality than the basic ditto.

As a complement or an alternative to the above, according to one preferred embodiment of the invention, the node 100 includes, or is associated with, a rules database 135. This database 135 contains parameters, which describe features of the playback/display capacity of the user terminals T1 and T2 in addition to the contents of the at least two basic request components r1, r2 and/or r3. The control unit 120 is configured to apply a set of rules from the rules database 135 to the result of the playback/ display capacity algorithm. Consequently, the control unit 120 produces an enhanced composite playback/display capacity C_{T-tot} of the user terminal T1. Again, the enhanced composite playback/display capacity C_{T-tot} is has higher expected data quality than the basic ditto.

In order to improve the efficiency of the proposed solution, according to one embodiment of the invention, the control unit 120 is configured to generate a data record reflecting the enhanced composite playback/display capacity C_{T-tot} of the user terminal T1, and store the data record in association with a terminal reference in a storage means 160 in the node 100. In response to a received future user request R, the control unit 120 is configured to check if this request R was originated from a user terminal T1 or T2, which has a terminal reference matching a terminal reference stored in the storage means 160. If this is found to be the case, the control unit 120 is further configured to retrieve an enhanced composite playback/display capacity C_{T-tot} from a data record being associated with the matching terminal reference. Thus, no further investigations in respect of the user terminal's capabilities are necessary because a full record thereof is readily available via the enhanced composite playback/display capacity C_{T-tot}.

Depending on the capabilities of the user terminal T1 relative to the format and complexity of the requested data file F1, it is possible that no version of the data file F1 exists in the collection of data files which matches the composite playback/display capacity C_{T-tot} of the user terminal T1. In such a case, according to one preferred embodiment of the invention, the control unit 120 is configured to select an alternative data file, which does match the composite playback/display capacity C_{T-tot} of the user terminal T1, however whose content is different from the content of the requested data file F1. For example, if the requested data file F1 represents a video sequence, the alternative data file may contain a default still image from that video sequence. Analogous to the above, the control unit 120 is configured to cause forwarding of the alternative data file to the user terminal T1.

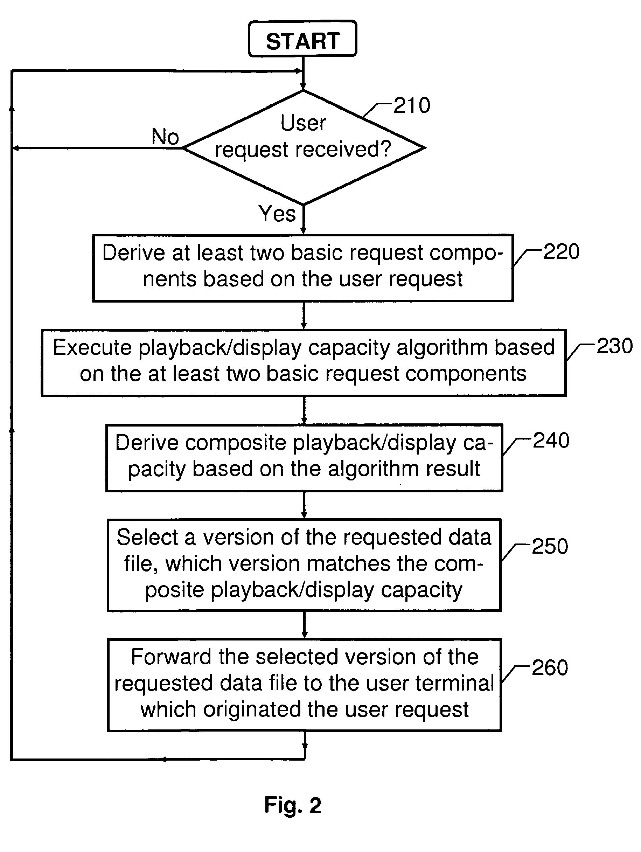

To sum up, the general method of supplying data files to user terminals according to the invention will now be described with reference to the flow diagram in Figure 2.

An initial step 210 checks if a user request R in respect of a data file F1 has been received in the node 100. If not, the procedure loops back and stays in step 210. Otherwise, a step 220 follows, which derives at least two basic request components r1, r2 and/or r3 based on the user request R. It is here assumed that the user request R originates from a user terminal T1 having a specific playback/display in respect of the contents of the data file F1, and that the user request R implies that the data file is to be played/shown in the user terminal T1.

Subsequently, a step 230 executes a playback/display capacity algorithm based on the at least two basic request components r1, r2 and/or r3. The algorithm contains at least two consecutive steps, i.e. at least one parameter resulting from an initial step is further processed in at least one subsequent step before producing an end result of the algorithm.

After that, a step 240 derives a composite playback/display capacity C_{T-tot} of the user terminal T1 based on a result of the execution of the algorithm executed in step 230. The composite playback/display capacity C_{T-tot} reflects the terminal's T1 capability to handle a particular type of content included in the requested data file F1, such as still images, audio, video, or a combination thereof.

Then, a step 250 selects a version F1vi of the requested data file F1, which version F1 vi matches the composite playback/display capacity C_{T-tot}. The selected version F1vi is identified in a collection of data files F1,..., Fm, including at least two different versions F1v1, F1v2, F1vi, F1vn of each data file F1, where each version is adapted for playback/display in at least one type of user terminal T1 or T2. Finally, a step 260 forwards the selected version F1vi of the requested data file F1 to the user terminal T1. Preferably, the data in the file F1vi is forwarded progressively in such a manner that the user terminal T1 is enabled to initiate playback/display of the data file prior to that all the contents of the file F1 vi has reached the user terminal T1.

After step 260, the procedure loops back to step 210.

For simplicity, Figure 2 only describes the procedure performed in respect of a single user request R. However, of course, the proposed node 100 is configured to handle multiple user requests R in parallel. Moreover, all of the process steps, as well as any sub-sequence of steps, described with reference to the figure 2 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components.

The invention is not restricted to the described embodiments in the figures, but is defined by the scope of the appended claims.

## Claims

1. A computer node (100) configured to be connected to a data network (N), the node (100) being associated with a collection of data files (F1,..., Fm) each representing a video sequence and being adapted to be supplied to user terminals (T1, T2) for playback/display therein, the node (100) comprising:
a request input interface (110) configured to receive user requests (R) from user terminals (T1, T2) via the data network (N), each user request (R) identifying a requested data file (F1) in the collection of data files (F1,..., Fm), and
a control unit (120) configured to receive incoming user requests (R) from the request input interface (110), and in response to each such request (R) select via a pointer (V_{ID}) a particular version (F1vi) of the data file (F1) from the collection of data files (F1,..., Fm), the collection of data files including at least two different versions (F1v1, F1v2, F1vi, F1vn) of each data file (F1) where each version is adapted for playback/display in at least one type of user terminal (T1, T2), where the collection of data files (F1,..., Fm) is stored in a payload database (140) of a network resource separated from the computer node (100), and the control unit (120) is further configured to:
derive at least two basic request components (r1, r2, r3) based on the user request (R), each basic request component (r1, r2, r3) reflecting a respective set of features characterizing specific aspects of a playback/display capacity of the user terminal (T1) from which the user request (R) was originated,
execute a playback/display capacity algorithm based on the at least two basic request components (r1, r2, r3), the algorithm containing at least two consecutive steps,
derive a composite playback/display capacity (C_{T-tot}) of the user terminal (T1) based on a result of the execution of said algorithm, the composite playback/display capacity (C_{T-tot}) reflecting the terminal's (T1) capability to handle a particular type of content included in the requested data file (F1),
select (V_{ID}) a version (F1vi) of the requested data file (F1) which version (F1vi) matches the composite playback/display capacity (C_{T-tot}), and
cause forwarding of the selected version (F1vi) of the requested data file (F1) from the payload database (140) to the user terminal (T1).

2. The node (100) according to claim 1, wherein a first component (r1) of the at least two basic request components (r1, r2, r3) comprises user-agent data reflecting at least one of the following pieces of information: vendor, model, display size, software version and character set supported.

3. The node (100) according to claim 2, wherein a second component (r2) of the at least two basic request components (r1, r2, r3) comprises accept data reflecting the particular type of content included in the requested data file (F1).

4. The node (100) according to claim 3, wherein a third component (r3) of the at least two basic request components (r1, r2, r3) comprises user-agent-profile data specifying a URL to a file describing a predefined set of features in respect of the playback/display capacity of the user terminal (T1).

5. The node (100) according to any one of the preceding claims, wherein the control unit (120) is further configured to derive at least one auxiliary request component in addition to the at least two basic request components (r1, r2, r3) based on the user request (R) if the control unit (120) finds that the basic request components (r1, r2, r3) fail to fulfill a completeness requirement.

6. The node (100) according to any one of the preceding claims, wherein the at least one auxiliary request component comprises at least one of:
an x-operamini-phone-ua header field,
an x-wap-profile header field,
an x-up-devcap-screenpixels header filed, and
an x-device-accept header field.

7. The node (100) according to any one of the preceding claims, comprising an exceptions database (130) describing corrections of known anomalies, and the control unit (120) is configured to adjust the features of the playback/display capacity of the user terminal (T1) derived from the at least two basic request components (r1, r2, r3) based on the contents of the exceptions database (130), and thus produce an enhanced composite playback/display capacity (C_{T-tot}) of the user terminal (T1).

8. The node (100) according to any one of the preceding claims, comprising a rules database (135) over parameters which describe features of the playback/display capacity of the user terminal (T1) in addition to the contents of the at least two basic request components (r1, r2, r3), and the control unit (120) is configured to apply a set of rules from the rules database (135) to the result of the playback/display capacity algorithm and thus produce an enhanced composite playback/display capacity (C_{T-tot}) of the user terminal (T1).

9. The node (100) according to any one of the claims 7 or 8, wherein the control unit (120) is configured to:
generate a data record reflecting the enhanced composite playback/display capacity (C_{T-tot}),
store the data record in association with a terminal reference in a storage means (160), and in response to a received future user request (R)
check if the future user request (R) was originated from a user terminal (T1, T2) which has a terminal reference matching a terminal reference stored in the storage means (160), and if so
retrieve an enhanced composite playback/display capacity (C_{T-tot}) from a data record being associated with the matching terminal reference.

10. The node (100) according to any one of the preceding claims, wherein the control unit (120) is configured to cause a progressive forwarding of the contents of the selected version (F1vi) of the requested data file (F1) to the user terminal (T1) in such a manner that the user terminal (T1) is enabled to initiate playback/display of the data file prior to that all the contents of the file (F1vi) has reached the user terminal (T1).

11. The node (100) according to claim 10, wherein the control unit (120) is configured to cause streaming of the selected version (F1vi) of the requested data file (F1) to the user terminal (T1).

12. The node (100) according to any one of the preceding claims, wherein the control unit (120) is configured to:
select an alternative data file if no version (F1v1, F1v2, F1vi, F1vn) of the requested data file (F1) can be found in the collection of data files (F1,..., Fm) that matches the composite playback/display capacity (C_{T-tot}) of the user terminal (T1), the alternative data file matching the composite playback/display capacity (C_{T-tot}) of the user terminal (T1) however including contents different from the contents of the requested data file (F1), and
cause forwarding of the alternative data file to the user terminal (T1).

13. A method of supplying data files (F1,..., Fm) to user terminals (T1, T2) for playback/display therein, each of the data files (F1,..., Fm) representing a video sequence, the method comprising:
receiving a user request (R) in a node (100) via a data network (N), the user request (R) originating from a user terminal (T1) and the user request (R) identifying a requested data file (F1) in a collection of data files (F1,..., Fm), the collection of data files including at least two different versions (F1v1, F1v2, F1vi, F1vn) of each data file (F1) where each version is adapted for playback/display in at least one type of user terminal (T1, T2); and
selecting via a pointer (V_{ID}) in response to the user request (R) a particular version (F1vi) of the data file (F1) from the collection of data files (F1,..., Fm), the collection of data files (F1,..., Fm) being stored in a payload database (140) of a network resource separated from the computer node (100),
deriving at least two basic request components (r1, r2, r3) based on the user request (R), each basic request component (r1, r2, r3) reflecting a respective set of features characterizing specific aspects of a playback/display capacity of the user terminal (T1) from which the user request (R) was originated;
executing a playback/display capacity algorithm based on the at least two basic request components (r1, r2, r3), the algorithm containing at least two consecutive steps;
deriving a composite playback/display capacity (C_{T-tot}) of the user terminal (T1) based on a result of the execution of said algorithm, the composite playback/display capacity (C_{T-tot}) reflecting the terminal's (T1) capability to handle a particular type of content included in the requested data file (F1);
selecting (V_{ID}) a version (F1vi) of the requested data file (F1) which version (F1vi) matches the composite playback/display capacity (C_{T-tot}); and
forwarding of the selected version (F1vi) of the requested data file (F1) from the payload database (140) to the user terminal (T1).

14. The method according to claim 13, wherein a first component (r1) of the at least two basic request components (r1, r2, r3) comprises user-agent data reflecting at least one of the following pieces of information: vendor, model, display size, software version and character set supported.

15. The method according to claim 14, wherein a second component (r2) of the at least two basic request components (r1, r2, r3) comprises accept data reflecting the particular type of content included in the requested data file (F1).

16. The method according to claim 15, wherein a third component (r3) of the at least two basic request components (r1, r2, r3) comprises user-agent-profile data specifying a URL to a file describing a predefined set of features in respect of the playback/display capacity of the user terminal (T1).

17. The method according to any one of the claims 13 to 16, comprising deriving at least one auxiliary request component in addition to the at least two basic request components (r1, r2, r3) if the control unit (120) finds that the basic request components (r1, r2, r3) fail to fulfill a completeness requirement.

18. The method according to any one of the claims 13 to 17, wherein the at least one auxiliary request component comprises at least one of:
an x-operamini-phone-ua header field,
an x-wap-profile header field,
an x-up-devcap-screenpixels header filed, and
an x-device-accept header field.

19. The method according to any one of the claims 13 to 18, comprising:
searching an exceptions database (130) describing corrections of known anomalies; and in response to a hit in said database (130) in respect of the user terminal (T1)
adjusting the features of the playback/display capacity of the user terminal (T1) derived from the at least two basic request components (r1, r2, r3), thus producing an enhanced composite playback/display capacity (C_{T-tot}) of the user terminal (T1).

20. The method according to any one of the claims 13 to 20, comprising:
searching a rules database (135) over parameters describing features of the playback/display capacity of the user terminal (T1) in addition to the contents of the at least two basic request components (r1, r2, r3); and
applying a set of rules from the rules database (135) to the result of the playback/display capacity algorithm, thus producing an enhanced composite playback/display capacity (C_{T-tot}) of the user terminal (T1).

21. The method according to any one of the claims 19 or 20, comprising:
generating a data record reflecting the enhanced composite playback/display capacity (C_{T-tot}); and
storing the data record in association with a terminal reference in a storage means (160).

22. The method according to claim 21, comprising:
receiving a new user request (R) in the node (100) via the data network (N);
checking if the new user request (R) was originated from a user terminal (T1, T2) having a terminal reference matching a terminal reference stored in the storage means (160); and if so
retrieving an enhanced composite playback/display capacity (C_{T-tot}) from a data record being associated with the matching terminal reference.

23. The method according to any one of the claims 13 to 22, comprising forwarding progressively the contents of the selected version (F1vi) of the requested data file (F1) to the user terminal (T1), the content being forwarded in such a manner that the user terminal (T1) is enabled to initiate playback/display of the data file prior to that all the contents of the file (F1vi) has reached the user terminal (T1).

24. The method according to claim 23, comprising streaming the selected version (F1vi) of the requested data file (F1) to the user terminal (T1).

25. The method according to any one of the claims 13 to 24, comprising:
selecting an alternative data file if no version (F1v1, F1v2, F1vi, F1vn) of the requested data file (F1) can be found in the collection of data files (F1,..., Fm) that matches the composite playback/display capacity (C_{T-tot}) of the user terminal (T1), the alternative data file matching the composite playback/display capacity (C_{T-tot}) of the user terminal (T1) however including contents different from the contents of the requested data file (F1); and
forwarding of the alternative data file to the user terminal (T1).

26. A computer program loadable into the memory of a data-processing apparatus, comprising software for controlling the steps of any of the claims 13 to 25 when said program is run on the data-processing apparatus.

27. A computer readable medium (125), having a program recorded thereon, where the program is to make a data-processing apparatus control the steps of any of the claims 13 to 25 when the program is loaded into the data-processing apparatus.

## Patentansprüche

1. Ein Computerknoten (100) angepasst um an ein Datennetzwerk (N) angeschlossen zu sein, der Knoten (100) ist mit einer Sammlung von Datendateien (F1, ..., Fm) verbunden, jede stellt eine Videosequenz dar und ist konfiguriert um an Benutzerendgeräte (T1, T2), zum Abspielen/Anzeigen darin, geliefert zu werden, der Knoten (100) aufweisend:
eine Anfrageeingangsschnittstelle (110) konfiguriert um Benutzeranfragen (R) von Benutzerendgeräten (T1, T2) über das Datennetzwerk (N) zu Empfangen, jede Benutzeranfrage (R) identifiziert eine angefragte Datendatei (F1) in der Ansammlung von Datendateien (F1, ..., Fm), und
eine Steuereinheit (120) konfiguriert zum Empfangen von eingehenden Benutzeranfragen (R) von der Anfrageeingangsschnittstelle (110) und in Antwort zu jeder solchen Anfrage (R) Auswählen mittels eines Zeigers (V_{ID}) eine spezielle Version (F1vi) von der Datendatei (F1) aus der Sammlung von Datendateien (F1, ..., Fm), die Sammlung von Datendateien beinhaltet mindestens zwei unterschiedliche Versionen (F1v1, F1v2, F1vi, F1vn) von jeder Datendatei (F1), wo jede Version konfiguriert ist zum Abspielen/Anzeigen in mindestens einem Typ von Benutzerendgerät (T1, T2), wo die Sammlung von Datendateien (F1, ..., Fm) gespeichert sind in einer Nutzlast-Datenbank (140) von einer Netzwerkressource, die von dem Computerknoten (100) getrennt ist und die Steuereinheit (120) ist weiter konfiguriert zum:
Herleiten zumindest zwei grundsätzlicher Anfragekomponenten (r1, r2, r3), basierend auf der Benutzeranfrage (R), jede grundsätzliche Anfragekomponente (r1, r2, r3) spiegelt einen jeweiligen Satz von Merkmalen wieder, kennzeichnend spezifische Aspekte von einer Abspiel-/Anzeigekapazität von dem Benutzerendgerät (T1) von dem die Benutzeranfrage (R) ausgegangen ist,
Ausführen eines Abspiel-/Anzeigekapazitätsalgorithmus basierend auf den mindestens zwei grundsätzlichen Anfragekomponenten (r1, r2, r3), der Algorithmus beinhaltet mindestens zwei aufeinanderfolgende Schritte,
Herleiten einer zusammengesetzten Abspiel-/Anzeigekapazität (C_{T-tot}) von dem Benutzerendgerät (T1) basierend auf einem Ergebnis von der Ausführung von dem Algorithmus, die zusammengesetzte Abspiel-/Anzeigekapazität (C_{T-tot}) reflektiert die Leistungsfähigkeit des Endgeräts (T1) um mit einem speziellen Typ von Inhalt, der in der angefragten Datendatei (F1) enthalten ist, umzugehen,
Auswählen (V_{ID}) einer Version (F1vi) von der angefragten Datendatei (F1), diese Version (F1vi) stimmt mit der zusammengefügten Abspiel-/Anzeigekapazität (C_{T-tot}) überein, und
Bewirken der Weiterleitung von der ausgewählten Version (F1vi) von der angefragten Datendatei (F1) von der Nutzlast-Datenbank (140) an das Benutzerendgerät (T1).

2. Der Knoten (100) nach Anspruch 1, wobei eine erste Komponente (r1) von den mindestens zwei grundsätzlichen Anfragekomponenten (r1, r2, r3) Benutzeragentendaten aufweist, die mindestens eines von den folgenden Informationsteilen wiederspiegeln: Anbieter, Model, Anzeigengröße, Softwareversion und unterstützter Typensatz.

3. Der Knoten (100) nach Anspruch 2, wobei eine zweite Komponente (r2) von den mindestens zwei grundsätzlichen Anfragekomponenten (r1, r2, r3) Akzeptanzdaten aufweist, die den speziellen Inhaltstyp in der angefragten Datendatei (F1) wiederspiegeln.

4. Der Knoten (100) nach Anspruch 3, wobei eine dritte Komponente (r3) von den mindestens zwei grundsätzlichen Anfragekomponenten (r1, r2, r3) Benutzeragentenprofildaten aufweist, die eine URL zu einer Datei spezifizieren, die einen vorbestimmten Satz von Merkmalen bezüglich der Abspiel-/Anzeigekapazität von dem Benutzerendgerät (T1) beschreiben.

5. Der Knoten (100) nach einem von den vorstehenden Ansprüchen, wobei die Steuereinheit (120) weiterhin konfiguriert ist um mindestens eine Hilfsanfragekomponente herzuleiten zusätzlich zu den mindestens zwei Anfragekomponenten (r1, r2, r3) basierend auf der Benutzeranfrage (R), falls die Steuereinheit (120) herausfindet, dass die grundsätzlichen Anfragekomponenten (r1, r2, r3) eine Vollständigkeits-Voraussetzung nicht erfüllen.

6. Der Knoten (100) nach einem von den vorstehenden Ansprüchen, wobei die mindestens eine Hilfsanfragekomponente mindestens aufweist eines von:
einem x-operamini-phone-ua Kopffeld,
einem x-wap-profile Kopffeld,
einem x-up-devcap-screenpixels Kopffeld, und
einem x-device-accept Kopffeld.

7. Der Knoten (100) nach einem von den vorstehenden Ansprüchen, aufweisend eine Ausnahmendatenbank (130), die Verbesserungen von bekannten Anomalitäten beschreibt, und die Steuereinheit (120) ist konfiguriert um die Merkmale anzupassen von der Abspiel-/Anzeigekapazität von dem Benutzerendgerät (T1), die von den mindestens zwei grundsätzlichen Anfragekomponenten (r1, r2, r3) hergeleitet wurden basierend auf den Inhalten von der Ausnahmendatenbank (130) und somit eine verbesserte zusammengefügte Abspiel-/Anzeigekapazität (C_{T-tot}) von dem Benutzerendgerät (T1) zu produzieren.

8. Der Knoten (100) nach einem von den vorstehenden Ansprüchen, aufweisend eine Regeldatenbank (135) über Parameter, die Merkmale von der Abspiel-/Anzeigekapazität von dem Benutzerendgerät (T1) beschreiben, zusätzlich zu den Inhalten von den mindestens zwei grundsätzlichen Anfragekomponenten (r1, r2, r3) und die Steuereinheit (120) ist konfiguriert um einen Satz von Regeln von der Regeldatenbank (135) auf die Ergebnisse von dem Abspiel-/Anzeigekapazitätsalgorithmus anzuwenden und somit eine verbesserte zusammengefügte Abspiel-/Anzeigekapazität (C_{T-tot}) von dem Benutzerendgerät (T1) herzustellen.

9. Der Knoten (100) nach einem von den Ansprüchen 7 oder 8, wobei die Steuereinheit (120) konfiguriert ist zum:
Generieren einer Datenaufnahme, die die verbesserte zusammengefügte Abspiel-/Anzeigekapazität (C_{T-tot}) wiederspiegelt,
Speichern der Datenaufnahme in Verbindung mit einer Endgerätreferenz in einem Speichermittel (160), und in Antwort auf eine empfangene zukünftige Benutzeranfrage (R) Prüfen, ob die zukünftige Benutzeranfrage (R) von einem Benutzerendgerät (T1, T2) ausging, das eine Endgerätereferenz hat, die mit einer Endgerätereferenz übereinstimmt, die in dem Speichermittel (160) gespeichert ist, und falls so Abrufen einer verbesserten zusammengefügten Abspiel-/Anzeigekapazität (C_{T-tot}) von einer Datenaufnahme, die mit der passenden Endgerätreferenz in Verbindung steht.

10. Der Knoten (100) nach einem von den vorstehenden Ansprüchen, wobei die Steuereinheit (120) konfiguriert ist zum progressiven Weiterleiten von den Inhalten von der ausgewählten Version (F1vi) von der angefragten Datendatei (F1) an das Benutzerendgerät (T1) in solch einer Weise, dass das Benutzerendgerät (T1) befähigt wird Abspielen/Anzeige von der Datendatei zu initiieren, bevor all die Inhalte von der Datei (F1vi) das Benutzerendgerät (T1) erreicht haben.

11. Der Knoten (100) nach Anspruch 10, wobei die Steuereinheit (120) konfiguriert ist Strömen von der ausgewählten Version (F1vi) von der ausgewählten Datendatei (F1) an das Benutzerendgerät (T1) zu bewirken.

12. Der Knoten (100) nach einem von den vorstehenden Ansprüchen, wobei die Steuereinheit (120) konfiguriert ist zum:
Auswählen einer alternativen Datendatei, falls keine Version (Fiv1, Fiv2, F1vi, F1vn) von der angefragten Datendatei (F1) in der Sammlung von Datendateien (F1, ..., Fm) gefunden werden kann, die mit der zusammengefügten Abspiel-/Anzeigekapazität (C_{T-tot}) von dem Benutzerendgerät (T1) übereinstimmt, die alternative Datendatei, stimmt mit der zusammengefügten Abspiel-/Anzeigekapazität (C_{T-tot}) von dem Benutzerendgerät (T1) überein, jedoch umfasst Inhalte, die unterschiedlich von den Inhalten von der angefragten Datendatei (F1) sind, und
Bewirken der Weiterleitung von der alternativen Datendatei an das Benutzerendgerät (T1).

13. Ein Verfahren zum Bereitstellen von Datendateien (F1, ..., Fm) an Benutzerendgeräte (T1, T2), zum Abspielen/Anzeigen darin, jede von den Datendateien (F1, ..., Fm) stellt eine Videosequenz dar, das Verfahren aufweisend:
Empfangen einer Benutzeranfrage (R) in einem Knoten (100) über ein Datennetzwerk (N), die Benutzeranfrage (R) stammt von einem Benutzerendgerät (T1) und die Benutzeranfrage (R) identifiziert eine angefragte Datendatei (F1) in einer Ansammlung von Datendateien (F1, ..., Fm), die Sammlung von Datendateien beinhaltet mindestens zwei unterschiedliche Versionen (F1v1, F1v2, F1vi, F1vn) von jeder Datendatei (F1), wo jede Version angepasst ist zum Abspielen/Anzeigen in mindestens einem Typ von Benutzerendgerät (T1, T2); und
Auswählen mittels eines Zeigers (vID), in Antwort auf die Benutzeranfrage (R) eine spezielle Version (F1vi) von der Datendatei (F1) aus der Sammlung von Datendateien (F1, ..., Fm), die Sammlung von Datendateien (F1, ..., Fm) ist in einer Nutzlast-Datenbank (140) von einer Netzwerkressource gespeichert, die von dem Computerknoten (100) getrennt ist,
Herleiten zumindest zwei grundsätzlicher Anfragekomponenten (r1, r2, r3), basierend auf der Benutzeranfrage (R), jede grundsätzliche Anfragekomponente (r1, r2, r3) spiegelt einen jeweiligen Satz von Merkmalen wieder, kennzeichnend spezifische Aspekte von einer Abspiel-/Anzeigekapazität von dem Benutzerendgerät (T1) von dem die Benutzeranfrage (R) ausgegangen ist;
Ausführen eines Abspiel-/Anzeigekapazitätsalgorithmus basierend auf den mindestens zwei grundsätzlichen Anfragekomponenten (r1, r2, r3), der Algorithmus beinhaltet mindestens zwei aufeinanderfolgende Schritte;
Herleiten einer zusammengesetzten Abspiel-/Anzeigekapazität (C_{T-tot}) von dem Benutzerendgerät (T1) basierend auf einem Ergebnis von der Ausführung von dem Algorithmus, die zusammengesetzte Abspiel-/Anzeigekapazität (C_{T-tot}) reflektiert die Leistungsfähigkeit des Endgeräts (T1) um mit einem speziellen Typ von Inhalt, der in der angefragten Datendatei (F1) enthalten ist, umzugehen;
Auswählen (v_{ID}) einer Version (F1vi) von der angefragten Datendatei (F1), diese Version (F1vi) stimmt mit der zusammengefügten Abspiel-/Anzeigekapazität (C_{T-tot}) überein; und
Weiterleiten von der ausgewählten Version (F1vi) von der angefragten Datendatei (F1) von der Nutzlast-Datenbank (140) an das Benutzerendgerät (T1).

14. Das Verfahren nach Anspruch 13, wobei eine erste Komponente (r1) von den mindestens zwei grundsätzlichen Anfragekomponenten (r1, r2, r3) Benutzeragentendaten aufweist, die mindestens eines von den folgenden Informationsteilen wiederspiegeln: Anbieter, Model, Anzeigengröße, Softwareversion und unterstützter Typensatz.

15. Das Verfahren nach Anspruch 14, wobei eine zweite Komponente (r2) von den mindestens zwei grundsätzlichen Anfragekomponenten (r1, r2, r3) Akzeptanzdaten aufweist, die den speziellen Inhaltstyp in der angefragten Datendatei (F1) wiederspiegeln.

16. Das Verfahren nach Anspruch 15, wobei eine dritte Komponente (r3) von den mindestens zwei grundsätzlichen Anfragekomponenten (r1, r2, r3) Benutzeragentenprofildaten aufweist, die eine URL zu einer Datei spezifizieren, die einen vorbestimmten Satz von Merkmalen bezüglich der Abspiel-/Anzeigekapazität von dem Benutzerendgerät (T1) beschreiben.

17. Das Verfahren nach einem von den Ansprüchen 13 bis 16, aufweisend Herleiten mindestens einer Hilfsanfragekomponente zusätzlich zu den mindestens zwei grundsätzlichen Anfragekomponenten (r1, r2, r3), falls die Steuereinheit (120) herausfindet, dass die grundsätzlichen Anfragekomponenten (r1, r2, r3) eine Vollständigkeits-Voraussetzung nicht erfüllen.

18. Das Verfahren nach einem von den Ansprüchen 13 bis 17, wobei die mindestens eine Hilfsanfragekomponente mindestens aufweist eines von:
einem x-operamini-phone-ua Kopffeld,
einem x-wap-profile Kopffeld,
einem x-up-devcap-screenpixels Kopffeld, und
einem x-device-accept Kopffeld.

19. Das Verfahren nach einem von den Ansprüchen 13 bis 18, aufweisend:
Suchen in einer Ausnahmendatenbank (130), die Verbesserungen von bekannten Anomalitäten beschreibt; und in Antwort auf einen Treffer in der Datenbank (130) bezüglich zu dem Benutzerendgerät (T1)
Anpassen der Merkmale von der Abspiel-/Anzeigekapazität von dem Benutzerendgerät (T1), die von den mindestens zwei grundsätzlichen Anfragekomponenten (r1, r2, r3) hergeleitet wurden, somit eine verbesserte zusammengefügte Abspiel-/Anzeigekapazität (C_{T-tot}) von dem Benutzerendgerät (T1) zu produzieren.

20. Das Verfahren nach einem von den Ansprüchen 13 bis 20, aufweisend:
Suchen in einer Regeldatenbank (135) über Parameter, die Merkmale von der Abspiel-/Anzeigekapazität von dem Benutzerendgerät (T1) beschreiben, zusätzlich zu den Inhalten von den mindestens zwei grundsätzlichen Anfragekomponenten (r1, r2, r3); und
Anwenden eines Satzes von Regeln von der Regeldatenbank (135) auf die Ergebnisse von dem Abspiel-/Anzeigekapazitätsalgorithmus, somit eine verbesserte zusammengefügte Abspiel-/Anzeigekapazität (C_{T-tot}) von dem Benutzerendgerät (T1) herzustellen.

21. Das Verfahren nach einem von den Ansprüchen 19 oder 20, aufweisend:
Generieren einer Datenaufnahme, die die verbesserte zusammengefügte Abspiel-/Anzeigekapazität (C_{T-tot}) wiederspiegelt; und
Speichern der Datenaufnahme in Verbindung mit einer Endgerätreferenz in einem Speichermittel (160).

22. Das Verfahren nach Anspruch 21, aufweisend:
Empfangen einer neuen Benutzeranfrage (R) in dem Knoten (100) über das Datennetzwerk (N);
Prüfen, ob die zukünftige Benutzeranfrage (R) von einem Benutzerendgerät (T1, T2) ausging, das eine Endgerätereferenz hat, die mit einer Endgerätereferenz übereinstimmt, die in dem Speichermittel (160) gespeichert ist, und falls so Abrufen einer verbesserten zusammengefügten Abspiel-/Anzeigekapazität (C_{T-tot}) von einer Datenaufnahme, die mit der passenden Endgerätreferenz in Verbindung steht.

23. Das Verfahren nach einem von den Ansprüchen 13 bis 22, aufweisend progressives Weiterleiten der Inhalte von der ausgewählten Version (F1vi) von der angefragten Datendatei (F1) an das Benutzerendgerät (T1), die Inhalte werden in solch einer Weise weitergeleitet, dass das Benutzerendgerät (T1) befähigt wird Abspielen/Anzeige von der Datendatei zu initiieren, bevor all die Inhalte von der Datei (F1vi) das Benutzerendgerät (T1) erreicht haben.

24. Das Verfahren nach Anspruch 23, aufweisend Strömen von der ausgewählten Version (F1vi) von der ausgewählten Datendatei (F1) an das Benutzerendgerät (T1).

25. Das Verfahren nach einem von den Ansprüchen 13 bis 24, aufweisend.
Auswählen einer alternativen Datendatei, falls keine Version (F1v1, F1v2, F1vi, F1vn) von der angefragten Datendatei (F1) in der Sammlung von Datendateien (F1, ..., Fm) gefunden werden kann, die mit der zusammengefügten Abspiel-/Anzeigekapazität (C_{T-tot}) von dem Benutzerendgerät (T1) übereinstimmt, die alternative Datendatei stimmt mit der zusammengefügten Abspiel-/Anzeigekapazität (C_{T-tot}) von dem Benutzerendgerät (T1) überein, jedoch umfasst Inhalte, die unterschiedlich von den Inhalten von der angefragten Datendatei (F1) sind; und Weiterleiten von der alternativen Datendatei an das Benutzerendgerät (T1).

26. Ein Computerprogramm ladbar in den Speicher von einer Datenverarbeitungsvorrichtung, aufweisend Software zum Steuern der Schritte von einem von den Ansprüchen 13 bis 25, wenn das Programm auf der Datenverarbeitungsvorrichtung ausgeführt wird.

27. Ein computerlesbares Medium (125), auf dem ein Programm gespeichert ist, wo das Programm eine Datenverarbeitungsvorrichtung die Schritte von einem von den Ansprüchen 13 bis 25 steuern lässt, wenn das Programm in die Datenverarbeitungsvorrichtung geladen wird.

## Revendications

1. Noeud informatique (100) configuré pour être connecté à un réseau de données (N), le noeud (100) étant associé à un ensemble de fichiers de données (F1,..., Fm) représentant chacun une séquence vidéo et étant aptes à être fournis à des terminaux d'utilisateurs (T1, T2) pour y être lus/affichés, le noeud (100) comprenant :
une interface de saisie de demande (110) configurée pour recevoir des demandes d'utilisateurs (R) à partir de terminaux d'utilisateurs (T1, T2) via le réseau de données (N), chaque demande d'utilisateur (R) identifiant un fichier de données demandé (F1) dans l'ensemble de fichiers de données (F1,..., Fm), et
une unité de commande (120) configurée pour recevoir des demandes d'utilisateurs entrantes (R) à partir de l'interface de saisie de demande (110), et en réponse à chacune de ces demandes (R) sélectionner via un pointeur (v_{ID}) une version particulière (F1vi) du fichier de données (F1) à partir de l'ensemble de fichiers de données (F1,..., Fm), l'ensemble de fichiers de données incluant au moins deux versions différentes (F1v1, F1v2, F1vi, F1vn) de chaque fichier de données (F1), chaque version étant adaptée pour une lecture/un affichage dans au moins un type de terminal d'utilisateur (T1, T2), l'ensemble de fichiers de données (F1,..., Fm) étant stocké dans une base de données utiles (140) d'une ressource de réseau séparée du noeud informatique (100), et l'unité de commande (120) étant en outre configurée pour :
déterminer au moins deux composants de demande de base (r1, r2, r3) à partir de la demande d'utilisateur (R), chaque composant de demande de base (r1, r2, r3) reflétant une série de fonctions respective caractérisant des aspects spécifiques d'une capacité de lecture/affichage du terminal d'utilisateur (T1) à partir duquel la demande d'utilisateur (R) a été issue,
exécuter un algorithme de capacité de lecture/affichage à partir desdits au moins deux composants de demande de base (r1, r2, r3), l'algorithme contenant au moins deux étapes consécutives,
déterminer une capacité de lecture/affichage composite (C_{T-tot}) du terminal d'utilisateur (T1) à partir d'un résultat de l'exécution dudit algorithme, la capacité de lecture/affichage composite (C_{T-tot}) reflétant la capacité du terminal (T1) à gérer un type particulier de contenu inclus dans le fichier de données demandé (F1),
sélectionner (v_{ID}) une version (F1vi) du fichier de données demandé (F1), laquelle version (F1vi) correspond à la capacité de lecture/affichage composite (C_{T-tot}), et
provoquer la transmission de la version sélectionnée (F1vi) du fichier de données demandé (F1) depuis la base de données utiles (140) jusqu'au terminal d'utilisateur (T1).

2. Noeud (100) selon la revendication 1, dans lequel un premier composant (r1) desdits au moins deux composants de demande de base (r1, r2, r3) comprend des données d'agent utilisateur reflétant au moins l'une des informations suivantes : vendeur, modèle, taille d'affichage, version de logiciel et jeu de caractères supporté.

3. Noeud (100) selon la revendication 2, dans lequel un deuxième composant (r2) desdits au moins deux composants de demande de base (r1, r2, r3) comprend des données d'acceptation reflétant le type particulier de contenu inclus dans le fichier de données demandé (F1).

4. Noeud (100) selon la revendication 3, dans lequel un troisième composant (r3) desdits au moins deux composants de demande de base (r1, r2, r3) comprend des données de profil d'agent utilisateur spécifiant une URL à un fichier décrivant une série de fonctions prédéfinie concernant la capacité de lecture/affichage du terminal d'utilisateur (T1).

5. Noeud (100) selon l'une quelconque des revendications précédentes, dans lequel l'unité de commande (120) est en outre configurée pour déterminer au moins un composant de demande auxiliaire en plus desdits au moins deux composants de demande de base (r1, r2, r3) à partir de la demande d'utilisateur (R) si l'unité de commande (120) établit que les composants de demande de base (r1, r2, r3) ne remplissent pas un critère d'exhaustivité.

6. Noeud (100) selon l'une quelconque des revendications précédentes, dans lequel ledit au moins un composant de demande auxiliaire comprend au moins un élément parmi :
un champ d'en-tête x-operamini-phone-ua,
un champ d'en-tête x-wap-profile,
un champ d'en-tête x-up-devcap-screenpixels et
un champ d'en-tête x-device-accept.

7. Noeud (100) selon l'une quelconque des revendications précédentes, comprenant une base de données d'exceptions (130) décrivant des corrections d'anomalies connues, et l'unité de commande (120) étant configurée pour ajuster les fonctions de la capacité de lecture/affichage du terminal d'utilisateur (T1) déterminée à partir desdits au moins deux composants de demande de base (r1, r2, r3) à partir du contenu de la base de données d'exceptions (130), et ainsi produire une capacité de lecture/affichage composite améliorée (C_{T-tot}) du terminal d'utilisateur (T1).

8. Noeud (100) selon l'une quelconque des revendications précédentes, comprenant une base de donnée de règles (135) couvrant des paramètres qui décrivent des fonctions de la capacité de lecture/affichage du terminal d'utilisateur (T1) en plus du contenu desdits au moins deux composants de demande de base (r1, r2, r3), et l'unité de commande (120) est configurée pour appliquer une série de règles à partir de la base de donnée de règles (135) au résultat de l'algorithme de capacité de lecture/affichage et ainsi produire une capacité de lecture/affichage composite améliorée (C_{T-tot}) du terminal d'utilisateur (T1).

9. Noeud (100) selon l'une quelconque des revendications 7 ou 8, dans lequel l'unité de commande (120) est configurée pour :
générer un enregistrement de données reflétant la capacité de lecture/affichage composite améliorée (C_{T-tot}),
stocker l'enregistrement de données en association avec une référence de terminal dans des moyens de stockage (160), et en réponse à une future demande d'utilisateur (R) reçue
vérifier si la future demande d'utilisateur (R) est issue d'un terminal d'utilisateur (T1, T2) qui a une référence de terminal correspondant à une référence de terminal stockée dans les moyens de stockage (160), et si c'est le cas
extraire une capacité de lecture/affichage composite améliorée (C_{T-tot}) à partir d'un enregistrement de données associé à la référence de terminal correspondante.

10. Noeud (100) selon l'une quelconque des revendications précédentes, dans lequel l'unité de commande (120) est configurée pour provoquer une transmission progressive du contenu de la version sélectionnée (F1vi) du fichier de données demandé (F1) jusqu'au terminal d'utilisateur (T1) d'une manière telle que le terminal d'utilisateur (T1) est en mesure de déclencher la lecture/l'affichage du fichier de données avant que tout le contenu du fichier (F1vi) ait atteint le terminal d'utilisateur (T1).

11. Noeud (100) selon la revendication 10, dans lequel l'unité de commande (120) est configurée pour provoquer la transmission en continu de la version sélectionnée (F1vi) du fichier de données demandé (F1) jusqu'au terminal d'utilisateur (T1).

12. Noeud (100) selon l'une quelconque des revendications précédentes, dans lequel l'unité de commande (120) est configurée pour:
sélectionner un autre fichier de données si aucune version (F1v1, F1v2, F1vi, F1vn) du fichier de données demandé (F1) ne peut être trouvée dans l'ensemble de fichiers de données (F1,..., Fm) qui correspond à la capacité de lecturelaffichage composite (C_{T-tot}) du terminal d'utilisateur (T1), l'autre fichier de données correspondant à la capacité de lecture/affichage composite (C_{T-tot}) du terminal d'utilisateur (T1) incluant toutefois un contenu différent du contenu du fichier de données demandé (F1), et
provoquer la transmission de l'autre fichier de données jusqu'au terminal d'utilisateur (T1).

13. Procédé pour fournir des fichiers de données (F1,..., Fm) à des terminaux d'utilisateurs (T1, T2) pour y être lus/affichés, chacun des fichiers de données (F1,..., Fm) représentant une séquence vidéo, le procédé consistant à :
recevoir une demande d'utilisateur (R) dans un noeud (100) via un réseau de données (N), la demande d'utilisateur (R) étant issue d'un terminal d'utilisateur (T1) et la demande d'utilisateur (R) identifiant un fichier de données demandé (F1) dans un ensemble de fichiers de données (F1,..., Fm), l'ensemble de fichiers de données incluant au moins deux versions différentes (F1v1, F1v2, F1vi, F1vn) de chaque fichier de données (F1) chaque version étant adaptée pour une lecture/un affichage dans au moins un type de terminal d'utilisateur (T1, T2) ; et
sélectionner via un pointeur (V_{ID}) en réponse à la demande d'utilisateur (R) une version particulière (F1vi) du fichier de données (F1) à partir de l'ensemble de fichiers de données (F1,..., Fm), l'ensemble de fichiers de données (F1,..., Fm) étant stocké dans une base de données utiles (140) d'une ressource de réseau séparée du noeud informatique (100),
déterminer au moins deux composants de demande de base (r1, r2, r3) à partir de la demande d'utilisateur (R), chaque composant de demande de base (r1, r2, r3) reflétant une série de fonctions respective caractérisant des aspects spécifiques d'une capacité de lecture/affichage du terminal d'utilisateur (T1) à partir duquel la demande d'utilisateur (R) a été issus ;
exécuter un algorithme de capacité de lecture/affichage à partir desdits au moins deux composants de demande de base (r1, r2, r3), l'algorithme contenant au moins deux étapes consécutives ;
déterminer une capacité de lecture/affichage composite (C_{T-tot}) du terminal d'utilisateur (T1) à partir d'un résultat de l'exécution dudit algorithme, la capacité de lecture/affichage composite (C_{T-tot}) reflétant la capacité du terminal (T1) à gérer un type particulier de contenu inclus dans le fichier de données demandé (F1) ;
sélectionner (v_{ID}) une version (F1vi) du fichier de données demandé (F1), laquelle version (F1vi) correspond à la capacité de lecture/affichage composite (C_{T-tot}) ; et
transmettre la version sélectionnée (F1vi) du fichier de données demandé (F1) depuis la base de données utiles (140) jusqu'au terminal d'utilisateur (T1).

14. Procédé selon la revendication 13, dans lequel un premier composant (r1) dudit au moins deux composants de demande de base (r1, r2, r3) comprend des données d'agent utilisateur reflétant au moins l'une des informations suivantes : vendeur, modèle, taille d'affichage, version de logiciel et jeu de caractères supporté.

15. Procédé selon la revendication 14, dans lequel un deuxième composant (r2) desdits au moins deux composants de demande de base (r1, r2, r3) comprend des données d'acceptation reflétant le type particulier de contenu inclus dans le fichier de données demandé (F1).

16. Procédé selon la revendication 15, dans lequel un troisième composant (r3) desdits au moins deux composants de demande de base (r1, r2, r3) comprend des données de profil d'agent utilisateur spécifiant une URL à un fichier décrivant une série de fonctions prédéfinie concernant la capacité de lecture/affichage du terminal d'utilisateur (T1).

17. Procédé selon l'une quelconque des revendications 13 à 16, consistant à déterminer au moins un composant de demande auxiliaire en plus desdits au moins deux composants de demande de base (r1, r2, r3) si l'unité de commande (120) établit que les composants de demande de base (r1, r2, r3) ne remplissent pas un critère d'exhaustivité.

18. Procédé selon l'une quelconque des revendications 13 à 17, dans lequel ledit au moins un composant de demande auxiliaire comprend au moins un élément parmi :
un champ d'en-tête x-operamini-phone-ua,
un champ d'en-tête x-wap-profile,
un champ d'en-tête x-up-devcap-screenpixels et
un champ d'en-tête x-device-accept.

19. Procédé selon l'une quelconque des revendications 13 à 18, consistant à :
explorer une base de données d'exceptions (130) décrivant des corrections d'anomalies connues ; et en réponse à une occurrence dans ladite base de données (130) concernant le terminal d'utilisateur (T1)
ajuster les fonctions de la capacité de lecture/affichage du terminal d'utilisateur (T1) déterminées à partir desdits au moins deux composants de demande de base (r1, r2, r3), pour ainsi produire une capacité de lecture/affichage composite améliorée (C_{T-tot}) du terminal d'utilisateur (T1).

20. Procédé selon l'une quelconque des revendications 13 à 20, consistant à :
explorer une base de donnée de règles (135) couvrant des paramètres décrivant des fonctions de la capacité de lecture/affichage du terminal d'utilisateur (T1) en plus du contenu desdits au moins deux composants de demande de base (r1, r2, r3) ; et
appliquer une série de règles à partir de la base de donnée de règles (135) au résultat de l'algorithme de capacité de lecture/affichage, pour ainsi produire une capacité de lecture/affichage composite améliorée (C_{T-tot}) du terminal d'utilisateur (T1).

21. Procédé selon l'une quelconque des revendications 19 ou 20, consistant à :
générer un enregistrement de données reflétant la capacité de lecture/affichage composite améliorée (C_{T-tot}) ; et
stocker l'enregistrement de données en association avec une référence de terminal dans des moyens de stockage (160).

22. Procédé selon la revendication 21, consistant à :
recevoir une nouvelle demande d'utilisateur (R) dans le noeud (100) via le réseau de données (N) ;
vérifier si la nouvelle demande d'utilisateur (R) est issue d'un terminal d'utilisateur (T1, T2) ayant une référence de terminal correspondant à une référence de terminal stockée dans les moyens de stockage (160) ; et si c'est le cas
extraire une capacité de lecture/affichage composite améliorée (C_{T-tot}) à partir d'un enregistrement de données associé à la référence de terminal correspondante.

23. Procédé selon l'une quelconque des revendications 13 à 22, consistant à transmettre progressivement le contenu de la version sélectionnée (F1vi) du fichier de données demandé (F1) jusqu'au terminal d'utilisateur (T1), le contenu étant transmis d'une manière telle que le terminal d'utilisateur (T1) est en mesure de déclencher la lecture/l'affichage du fichier de données avant que tout le contenu du fichier (F1vi) ait atteint le terminal d'utilisateur (T1).

24. Procédé selon la revendication 23, consistant à transmettre en continu la version sélectionnée (F1vi) du fichier de données demandé (F1) jusqu'au terminal d'utilisateur (T1).

25. Procédé selon l'une quelconque des revendications 13 à 24, consistant à :
sélectionner un autre fichier de données si aucune version (F1v1, F1v2, F1vi, F1vn) du fichier de données demandé (F1) ne peut être trouvée dans l'ensemble de fichiers de données (F1,..., Fm) qui correspond à la capacité de lecture/affichage composite (C_{T-tot}) du terminal d'utilisateur (T1), l'autre fichier de données correspondant à la capacité de lecture/affichage composite (C_{T-tot}) du terminal d'utilisateur (T1) incluant toutefois un contenu différent du contenu du fichier de données demandé (F1) ; et
transmettre l'autre fichier de données jusqu'au terminal d'utilisateur (T1).

26. Programme informatique pouvant être chargé dans la mémoire d'un appareil de traitement de données, comprenant un logiciel pour commander les étapes de l'une quelconque des revendications 13 à 25 quand ledit programme est exécuté sur l'appareil de traitement de données.

27. Support lisible par ordinateur (125), ayant un programme enregistré dessus, le programme devant faire qu'un appareil de traitement de données commande les étapes de l'une quelconque des revendications 13 à 25 quand le programme est chargé dans l'appareil de traitement de données.
